# EUROPEAN PATENT APPLICATION

(11) **EP 3 231 295 A1**
(43) Date of publication of application: **18.10.2017**
(21) Application number: 14907802.4
(22) Date of filing: 11.12.2014
(51) Int. Cl.: A23L 5/00

(54) **SELF-DIGESTED FOOD PRODUCT DERIVED FROM FRUIT**

(71) Applicant: Regalo Lab Co., Ltd., Akita-shi, Akita 010-0973 (JP)
(72) Inventor: OTSUKA, Yukie, Akita-shi Akita 010-1414 (JP)
(74) Representative: Müller, Enno
(86) International application number: PCT/JP2014/082799
(87) International publication number: WO 2016/092661

(57) **Abstract**

[Problem] There exists a need for salt-free/sugar-free Rosaceae fruits, such as apricots and plums, extracts thereof, and products utilizing these, that have good storage properties. [Solution] By bringing about self-digestion of fruit at 65°C or below, preferably at 45 to 60°C, the organic acid concentration is improved, and solubilization of pectin is promoted, making possible the manufacture of salt-free self-digested fruits and extracts thereof having good physical properties and storage properties, as well as making possible the manufacture of salt-free processed food products, cosmetics, or fermented food products, utilizing salt-free seasonings containing comparable concentrations of pectin and organic acids, or these salt-free self-digested fruits and salt-free self-digested fruit extracts.

## Description

### TECHNICAL FIELD

The present invention relates to salt-free self-digested fruits, extracts thereof, and salt-free seasonings containing comparable concentrations of pectin and organic acids, in which solubilization of pectin is facilitated and organic acids are increased by bringing about self-digestion of fruit belonging to the family Rosaceae. The present invention further relates to self-digested vegetables and fruits using the salt-free self-digested fruits, extracts thereof, and the salt-free seasonings, and relates to processed food products, cosmetics, and fermented food products using the self-digested vegetables and fruits.

The self-digested food product is produced through a process of degrading proteins and carbohydrates of food material itself by action of degradative enzymes such as protease and amylase indigenous to the material. This process of degradation entails breakdown of tissue. The word "ethanol concentration" as used herein is intended to be expressed in percent by weight.

### BACKGROUND ART

As fruits belonging to the family Rosaceae, there are apricots, plums, peaches, cherries, Chinese quinces, loquats, apples, pears, quinces. These fruits are primarily served for eating raw and some are preserved in jam or sugaring. Another type of preservation is salt curing, which is particularly popular in preserving plums.

After being subject to salt curing, salt cured plums are utilized as pickled plums and pickled plums that are dried partially (hereinafter referred to as umeboshi). The pickled plum and umeboshi have salt concentration as high as around 20%, so acetic acid is used to lower pH for producing seasoned pickled plum and umeboshi with salt concentration lowered to around 7%.

There is a demand for processed plum products having salt concentration lower than the seasoned products. In view of such demand, Patent document 1 discloses a processed plum product wherein, organic acid is 3wt% or more and acetic acid in the organic acid is 5wt% or more in the plum pulp, and salt in the plum pulp is 3wt% or less. Patent document 2 discloses a method of preserving plums in salt water with 0.5wt% to 15wt% of salt concentration and not more than 5wt% of organic acids concentration by cooling after bringing the plums into contact with warm salt water for killing cells and bringing about self-digestion without inactivating autolysins.

As described above, the method is generally used to lower pH with organic acids for prevention of microbial spoilage caused by reduced salt.

Patent document 3 discloses a method of producing salt-free plum pickled in vinegar to which vegetal sweetness such as brown sugar is added. Patent document 4 discloses the vinegar as a main ingredient in which plums are pickled. Patent document 5 discloses a method in which frozen plums are brought into contact with hot water of 50 to 65°C for thawing and then put into heated sugar solution, which is rapidly heated further to a boiling point, maintaining the temperature at around the boiling point for boiling down and sterilization. Patent document 6 discloses a method of producing salt-free or extremely low-salt umeboshi by soaking high-salt umeboshi in a solution containing acetic acid mainly and citric acid for removing salt. Patent document 7 discloses a method of producing salt-free processed plums by placing the container which is filled only with plums in a cellar at temperature ranging from 50 to 90°C for ranging from 50 days to 90 days for heat-maturing, tuning the plums into black. Patent document 8 discloses a method of producing umeboshi by drying and heating at temperature ranging from 100 to 350°C. Patent document 9 discloses a processed plum product, in the pulp of which, salt is not more than 3wt%, organic acids is not less than 3wt% containing 5wt% or more of acetic acid.

As described above, preserving properties have been given to salt-free umeboshi by using organic acids having higher concentration than those used in low-salt processed plum products, by drying at high temperature of 100 to 350°C, or by lowering water activity by means of drying until the color turns into back.

There have been extracts derived from plums such as yellowish-brown extracts produced by boiling down the juice of squeezed green plums for a few days and black extracts of plum flesh produced by boiling down green plums for long hours.

Other than the above, there have been various methods for producing plum extracts and utilizing thereof. Patent document 10 discloses collecting plum extracts containing pectin by isolating immersed plums from plum liquor and immersing them in hot water at 95 to 100°C for 60 to 90 minutes, and producing sherbet by freezing the plum extracts. Patent document 11 discloses a method for producing plum jam by freezing fully-ripened or after-ripened plums, coming in contact with water at 50 to 65°C for thawing, and adding sugar to the thawed plums, which are stirred and heated while being maintained at boiling temperature for 4 to 40 minutes so as to remove water from the plums and to elute pectin.

Mumefural, a functional component contained in concentrated plum extract, has received attention in recent years. In this regard, Patent document 12 discloses a method for producing the plum extract rich in mumefural consisting of two steps, a concentrating step for reducing water content and a heating step for generating memefural while maintaining the reduced water content, wherein the water content in the extract to be processed is not more than 40wt%, pressure is applied during the heating step, and saccharide or citric acid is added before finishing as extract in the heating step.

As for producing pectin and utilizing thereof, Patent document 13 discloses a method of preparing pectin from fruits, fruit rinds, or pomace with the use of citric acid or citric salt under the condition of 4.0% to 20% (w/v) citric acid concentration and pH 5.5 to 8.3 at a temperature ranging from 40°C to 80°C. Patent document 14 discloses a health food produced by subjecting salted plums to solid-liquid separation, desalting the obtained vinegar from the plumes by means of electrodialysis etc., evaporating water from the resultant vinegar having low salt content, and obtaining a concentrated product in the form of sol. Patent document 15 discloses a salt-free gelatinized jelly food having a sugar content concentrated to not less than 55% by separating salt-free pickled plums from the plum liqueur, removing stones from the pickled plums, and processing the remained pulp under a reduced pressure lower than the atmospheric pressure at a temperature of 95-97°C.

The amounts of organic acids and pectin contained in plums or plum extracts are known. According to Non-patent documents 1 and 2, in the pulp of umeboshi or processed plum products, as organic acid, 5.9g of citric acid, 3.5g of malic acid, 0.22g of oxalic acid, 0.79g of succinic acid, and 0.012g of tartaric acid are contained at a maximum per 100g of pulp with the maximum sum of citric acid and malic acid being 5.9g. As to the amount of organic acids contained in uncondensed plum extract obtained from the squeezed pulp, no data has been reported; however, it does not over the amount of organic acids contained in the pulp. According to Non-patent documents 3 and 4, the amount of pectin contained in plum is reported to be about 0.37 to 0.38%. The amount of pectin contained in uncondensed plum extract has been unknown generally.

### RELATED ART DOCUMENTS

### PATENT DOCUMENTS

Patent Document 1: Japanese Unexamined Patent Application Publication No. H09-299022
Patent Document 2: Japanese Unexamined Patent Application Publication No. 2001-046006
Patent Document 3: Japanese Unexamined Patent Application Publication No. H10-323154
Patent Document 4: Japanese Unexamined Patent Application Publication No. 2008-193902
Patent Document 5: Japanese Unexamined Patent Application Publication No. 2010-200648
Patent Document 6: Japanese Unexamined Patent Application Publication No. 2010-207132
Patent Document 7: Japanese Unexamined Patent Application Publication No. 2012-157310
Patent Document 8: Japanese Unexamined Patent Application Publication No. 2009-136279
Patent Document 9: Japanese Unexamined Patent Application Publication No. H09-299022
Patent Document 10: Japanese Unexamined Patent Application Publication No. H08-070810
Patent Document 11: Japanese Unexamined Patent Application Publication No. 2010-110231
Patent Document 12: Japanese Unexamined Patent Application Publication No. 2004-081014
Patent Document 13: Japanese Unexamined Patent Application Publication No. 2008-199990
Patent Document 14: Japanese Unexamined Patent Application Publication No. H11-266833
Patent Document 15: Japanese Unexamined Patent Application Publication No. H11-169129

### NON-PATENT DOCUMENTS

Non-patent document 1: *"*Nippon Shokuhin Kagaku Kogaku Kaishi ", volume 52, No. 10, pp.472-478, 2005
Non-patent document 2: *"*Nippon Shokuhin Kogyo Gakkaishi", volume 32, No. 9, pp.669-676, 1985
Non-patent document 3: *"*The Japanese Journal of Nutrition and Dietetics", volume 32, No. 1, pp. 9-18, 1974 Non-patent document 4: *"*Science of Cookers". 5(2), pp.70-79, 1972

### SUMMARY OF THE INVENTION

### PROBLEMS TO BE SOLVED BY THE INVENTION

Typical preserved foods of Rosaceae fruits are jam of apple etc., sugaring, pickled plum, and umeboshi. The conventional method of producing pickled plum and umeboshi entails high concentration of salt for giving preserving properties, leading to development in reducing salt by using liquid seasoning, etc. Recently, various technologies have been presented for producing products having much lower level or free of salt. However, the umeboshi and pickled plum produced by using these technologies for lowering or eliminating salt have disadvantages including use of organic acids as additives or change in color tone. In addition, processing at high temperature rapidly deactivates various enzymes in plums and fails to bring out properties such as viscosity and high concentration of organic acids that are intrinsic to general processed ripened plum products.

Among conventional plum extracts, the main type of salt-free extract is a black liquid having high viscosity made by boiling down juice of green plum, while the major type of low-salt extract is a liquid having low-to-moderate viscosity with organic acids such as acetic acid being added for preserving properties. Meanwhile, the salt-free type of extracts without organic acids being added has not been seen so much. If acid is not added to the plum extract, the total acidity expressed by the neutralization quantity obtained from titration using 10 normal solution of NaOH is as low as 8 to 12 ml. This level of acidity is not sufficient to maintain preserving properties.

Even though plums contain pectin, only a part of the pectin is solubilized in conventional plum extracts. For solubilizing pectin, various organic acids are added and heating treatment is performed. Even so, sufficient solubilization of pectin is not achieved and indicating additives is required.

Responsive to the above problems, in Rosaceae fruits such as apricots, in plums among others, there has been a need for salt-free and additive-free pickled plum and umeboshi having sufficiently solubilized pectin that is contained inherently and having various organic acids.

Also, there has been a need for salt-free and additive-free plum extract having sufficiently solubilized pectin that is contained inherently and having various organic acids.

In view of the above problems, the present invention has an object to provide processed products and extracts of Rosaceae fruits and the food and cosmetics using thereof having higher concentrations of pectin and organic acids than conventional ones.

### MEANS OF SOLVING THE PROBLEM

It is found that activating autolysins in Rosaceae fruits such as apricot and plum at 65°C or below, preferably at 45 to 60°C, converts some of saccharide contained in the pulp into organic acids, which serves to increase the concentration of organic acids in the fruit and to facilitate solubilization of pectin. Also, self-digestion at a temperature higher than room temperature is found to further facilitate solubilization of pectin. Consequently, it is confirmed that production is possible of pickled plum, umeboshi, plum extract, and apricot processed products, all of which are rich in pectin and organic acids and free of salt, and of cosmetics and processed food products utilizing thereof. In addition, such processed food products are confirmed to have good preserving properties as well as good taste.

The present invention provides the following aspects.
(1) A first aspect of the present invention provides a self-digested food product derived from fruit, which is a salt-free self-digested fruit obtained by bringing about self-digestion of the fruit at 65°C or below and have yellowish-brown or reddish-brown color. In the salt-free self-digested fruit, when ethanol is added to a hot water extract of the fruit at a 80% ethanol concentration, a fraction of insolubilized pectin is 0.1 g or more, preferably 0.40g or more, and has an average molecular weight of 50,000 or more, preferably from 50,000 to 200,000, per 100 g of an edible part of the fruit, while a solubilized part has 2.0 g or more, preferably 4.9g or more, of citric acid and 1.0 g or more, preferably 1.1g or more, of malic acid, preferably 0.23g or more of oxalic acid and 0.80g or more of succinic acid, per 100 g of the edible part of the fruit. The edible part of the fruit has pH 3.0 or less, preferably from 2.3 to 2.9, and has °Brix 6.0 or more, preferably from 6.7 to 8.1.
(2) A second aspect of the present invention provides a self-digested food product derived from fruit, which is an extract of salt-free self-digested fruit obtained by bringing about self-digestion of the fruit at 65°C or below. When ethanol is added to the extract of the salt-free self-digested fruit at a 80% ethanol concentration, a fraction of insolubilized pectin is, 0.1 g or more, preferably 0.40g or more, per 100 ml of the extract, while a solubilized part has, per 100 ml of the extract, 2.0 g or more, preferably 4.9g or more, of citric acid, 1.0 g or more, preferably 1.1g or more, of malic acid, and preferably 0.23g or more of oxalic acid and 0.80g or more of succinic acid. The edible part of the fruit has pH 3.0 or less, preferably from 2.3 to 2.9, °Brix 6.0 or more, preferably from 6.7 to 8.1, and acidity of 8 ml or more, preferably 12 ml or more.
(3) A third aspect of the present invention provides a self-digested food product derived from fruit according to the first and second aspects of the present invention, wherein the fruit belongs to the family Rosaceae.
(4) A fourth aspect of the present invention provides a dried food product in chunk or in powder that is produced by drying the self-digested food product derived from fruit according to the first aspect of the present invention.
(5) A fifth aspect of the present invention provides a dried food in powder that is produced by drying the self-digested food product derived from fruit according to the second aspect of the present invention.
(6) A sixth aspect of the present invention provides a self-digested food product that is produced by applying the self-digested food product derived from fruit according to the first or second aspect of the present invention to one or a plurality of ingredients selected from the group consisting of vegetables, fruits, self-digested vegetables, and self-digested fruits and by bringing about additional self-digestion.
(7) A seventh aspect of the present invention provides a processed food product that is produced by using the self-digested food product derived from fruit according to the first or second aspect of the present invention, or the self-digested food product according to the sixth aspect of the present invention.
(8) A eighth aspect of the present invention provides a chemical product that is produced by using the self-digested food product derived from fruit according to the first or second aspect of the present invention, or the self-digested food product according to the sixth aspect of the present invention.
(9) A ninth aspect of the present invention provides a fermented food product that is produced by fermenting the self-digested food product derived from fruit according to the first or second aspect of the present invention, or the self-digested food product according to the sixth aspect of the present invention.

### EFFECTS OF THE INVENTION

According to the present invention, it becomes possible to provide the processed products and extracts of Rosaceae fruits having higher concentrations of pectin and organic acids than conventional ones, and to provide foods and cosmetics using thereof.

### DESCRIPTION OF THE EMBODIMENT

As described above, it is found that self-digestion at a temperature higher than room temperature not only facilitates solubilization of pectin but also enhances preserving properties as the pH value is lowered due to high concentration of organic acids. The process required for these effects is activating autolysins contained in Rosaceae fruits at 65°C or below, preferably at 45°C to 60°C, so as to convert some of saccharide contained in the pulp into organic acids, which serves to increase the concentration of organic acids in the fruit. These organic acids having high concentration lowers the pH value, leading to enhancing preserving properties and facilitating solubilization of pectin in the pulp.

It is confirmed that the self-digested product derived from fruit after being subject to the above process is rich in pectin and organic acids and has good preserving properties as well as good taste. Further, it is confirmed that the process enables production of pickled plum, umeboshi, plum extract, and processed food of apricot. Further, cosmetics or the like utilizing the self-digested food product derived from fruit are confirmed to be producible.

The self-digested food product derived from fruit according to an embodiment of the present invention is a self-digested fruit that has undergone a process of self-digestion. The self-digested fruit is salt-free and has yellowish-brown or reddish-brown color. When ethanol is added to the hot water extract of the fruit at a 80% ethanol concentration, a fraction of insolubilized pectin is, per 100 g of an edible part of the fruit, 0.1 g or more, preferably 0.40g or more, and has an average molecular weight of 50,000 or more, preferably from 50,000 to 200,000, while a solubilized part has 2.0 g or more, preferably 4.9g or more, of citric acid and 1.0 g or more, preferably 1.1g or more, of malic acid, preferably 0.23g or more of oxalic acid and 0.80g or more of succinic acid, per 100 g of the edible part of the fruit. The edible part of the fruit has pH 3.0 or less, preferably from 2.3 to 2.9, and has °Brix 6.0 or more, preferably from 6.7 to 8.1.

The self-digested food product derived from fruit according to another embodiment of the present invention is an extract of self-digested fruit obtained from the self-digested fruit that has undergone a process of self-digestion. The extract of self-digested fruit is a liquid portion of the self-digested fruit or a flowing liquid out of the fruit during self-digestion. When ethanol is added to the extract of the salt-free self-digested fruit at a 80% ethanol concentration, a fraction of insolubilized pectin is, per 100 ml of the extract, 0.1 g or more, preferably 0.40g or more, while a solubilized part has 2.0 g or more, preferably 4.9g or more, of citric acid and 1.0 g or more, preferably 1.1g or more, of malic acid, preferably 0.23g or more of oxalic acid and 0.80g or more of succinic acid, per 100 ml of the extract. The edible part of the fruit has pH 3.0 or less, preferably from 2.3 to 2.9, °Brix 6.0 or more, preferably from 6.7 to 8.1, and has acidity of 8 ml or more, preferably 12 ml or more. Further, the extract of self-digested fruit has no salt.

The salt-free seasoning liquid according to another embodiment of the present invention is a liquid similar to the extract of self-digested fruit. The salt-free seasoning liquid is prepared by mixing a pectin preparation and an organic acid preparation. The salt-free seasoning liquid has 0.1g or more, preferably 0.40g or more, of pectin per 100ml of the liquid, and at least one of the organic acids including citric acid, malic acid, oxalic acid, and succinic acid is contained in the amount of 3.0g or more, preferably 6.0g or more. The salt-free seasoning liquid has pH 3.0 or less, preferably 1.8 or less.

Any fruits belong to the family Rosaceae such as apricots, plums, peaches, cherries, Chinese quince, loquats, apples, pears, and quince may be material fruits for the self-digested food product derived from fruit according to the present invention. In particular, the ones that are rich in organic acids, for example, plums, apricots, or quinces, are preferable.

The dried food product according to another embodiment of the present invention is produced by drying the self-digested fruit of the present invention. Drying the self-digested fruit produces the self-digested food product derived from fruit in the form of chunk, powder, or mixture thereof.

Another type of the above dried food product is produced by drying the extract of self-digested fruit according to the present invention. Drying the extract of self-digested fruit produces the self-digested food product derived from fruit in the form of powder.

The self-digested food product according to another embodiment of the present invention is produced by using the self-digested fruit of the present invention or the extract thereof. In the self-digested food product, the self-digested fruit of the present invention or the extract thereof is added to one or a plurality of ingredients selected from the group consisting of vegetables, fruits, self-digested vegetables, and self-digested fruits, and additional self-digestion is brought about. The material self-digested fruits for the self-digested food product may include self-digested fruits that undergo another process other than the present invention. The self-digested food product may include, for example, seasonings such as sauces and dipping sauces, which undergo additional self-digestion by adding the extract of self-digested fruit to the self-digested fruit.

The processed food product according to another embodiment of the present invention is produced by using the self-digested fruit, the extract thereof, or the self-digested food product, of the present invention. The typical usage is as material for processed food products. However, the usage should not be considered as limiting to materials but should be considered as including causing extraction or change in substance under an acidic condition in processed food production. Also, the processed food product may be produced by using the salt-free seasoning liquid of the present invention.

The chemical product according to another embodiment of the present invention is produced by using the self-digested fruit, the extract thereof, or the self-digested food product, of the present invention. The chemical product is, for example, cosmetics or bath agents. The chemical product includes skin lotion, skin milk, serum, facial cleanser, makeup remover, detergent, bath agent, and other general cosmetics and chemicals. Also, the chemical product may be obtained by using the salt-free seasoning liquid of the present invention.

The fermented food product according to another embodiment of the present invention is obtained by fermenting the self-digested fruit, the extract thereof, or the self-digested food product of the present invention. The fermented food product includes, for example, miso (soybean paste), soy sauce, sweet cooking rice wine, vinegar, rice wine, wine, distilled spirits, bread, sweet fermented rice drink, and other general fermented food. Also, the fermented food product may be obtained by using the salt-free seasoning liquid of the present invention.

### EXAMPLES

The detailed description of the present invention will now be made with reference to the examples. However, it should be noted that the invention is not limited to specific details and examples shown and described.

### (Example 1) Salt-free umeboshi

Some types of ume (plum) were washed with water and subject to forced-air drying during self-digestion at 55°C in the thermostatic device to produce salt-free umeboshi. TABLE 1 shows processing conditions.

**[TABLE 1]**

| Processing Conditions in Example 1 | | | | | |
|---|---|---|---|---|---|
| Number | 1 | 2 | 3 | 4 | 5 |
| Type of Plum | Nanko-ume | Naniwa-ume | Nanko-ume | Naniwa-ume | Naniwa-ume |
| Preserving Condition | Room temperature | Room temperature | Room temperature | Room temperature | Cooling at 4°C |
| Weight of Plum | 1.0kg | 464.2g | 254.04g | 448.12g | 52.0g |
| Dipping in Plum Extract | None | None | 1 hour before self-digestion | 1 hour before self-digestion | After air drying |
| Quantity of Plum Extract | | | 95.06g | 130.26g | 12.53g |
| Self-digestion & Drying | 6 hours at 55°C | 16 hours at 55°C | 24 hours at 55°C | 24 hours at 55°C | 16 hours at 55°C |
| | 18 hours at 25°C | 48 hours at 25°C | 40 hours at 25°C | 40 hours at 25°C | 16 hours at 25°C |
| | 24 hours at 55°C | 16 hours at 55°C Repeating 16 hours at 25°C | 16 hours at 55°C | 16 hours at 55°C | 16 hours at 55°C Repeating 16 hours at 25°C for 5 days |
| | 96 hours at 25°C | - | - | - | - |
| | 2 hours at 55°C | - | - | - | - |

TABLE 2 shows the results of analyzing the salt-free umeboshi after drying. There was no microorganism contamination observed in any of the salt-free umeboshi during preservation for two weeks at room temperature.

**[TABLE 2] Analyzing Results in Example 1**

| per 100 g of edible part of fruit (pulp of umeboshi) | | | | | |
|---|---|---|---|---|---|
| Number | 1 | 2 | 3 | 4 | 5 |
| Quantity of Pectin | 0.7g | 0.4g | 0.85g | 1.5g | 2.0g |
| Molecular Weight of Pectin | 150000 | 200000 | 110000 | 75000 | 50000 |
| Citric Acid | 5.2g | 4.9g | 5.5g | 6.0g | 7.1g |
| Malic Acid | 1.3g | 1.1g | 1.9g | 3.1g | 4.2g |
| Oxalic Acid | 0.30g | 0.23g | 0.41g | 0.47g | 0.52g |
| Succinic Acid | 0.95g | 0.80g | 1.20g | 1.76g | 2.10g |
| pH | 2.72 | 2.90 | 2.56 | 2.49 | 2.30 |
| Brix | 6.9 | 6.7 | 7.2 | 7.5 | 8.1 |
| Color | Showy Pink | Reddish Brown | Showy Pink | Light Reddish Brown | Showy Pink |

### (Example 2) Salt-free plum extract

Some types of ume (plum) were washed with water and vacuum-packed or sealed in polystyrene bags that were kept at temperature ranging from 50 to 60°C in the thermostatic tank during self-digestion to obtain plum extracts. TABLE 3 shows the processing conditions including self-digestion.

**[TABLE 3] Processing Conditions in Example 2**

| Number | 1 | 2 | 3 | 4 | 5 | 6 | 7 | 8 |
|---|---|---|---|---|---|---|---|---|
| Type of Plum | Naniwa -ume | Nanko -ume | Ao-ume | Nanko -ume | Ao-ume | Ao-ume | Naniwa -ume | Ao-ume |
| Preserving Condition | Room temperature | Room temperature | Room temperature | Room temperature | Freezing | Freezing | Freezing | Freezing |
| Weight of Plum | 1.18kg | 1.0kg | 1.0kg | 1.0kg | 1.0kg | 1.0kg | 1.0kg | 1.0kg |
| Temperature of Self-digestion | 55°C | 55°C | 55°C | 55°C | 55°C | 50°C | 60°C | 55°C |
| Duration of Self-digestion | 39 Days | 56 Days | 73 Days | 48 Days | 41 Days | 6 Days | 6 Days | 6 Days |
| Frequency of Separation | 4 Times | 4 Times | 4 Times | 4 Times | Once | Once | Once | Once |
| Weight of Obtained Plum Extract | 521.44g | 567.25g | 711.3g | 564.48g | 492.26g | 235.28g | 532.11g | 301.55g |

TABLE 4 shows the results of analyzing the salt-free plum extracts. There was no microorganism contamination observed in any of the salt-free plum extracts during preservation for one month at room temperature.

**[TABLE 4] Analyzing Results in Example 2**

| per 100 ml of plum extract | | | | | | | | |
|---|---|---|---|---|---|---|---|---|
| Number | 1 | 2 | 3 | 4 | 5 | 6 | 7 | 8 |
| Quantity of Pectin | 3.5g | 4.5g | 4.0g | 3.3g | 3.5g | 0.40g | 0.47g | 0.45g |
| Molecular Weight of Pectin | 120000 | 50000 | 80000 | 140000 | 110000 | 200000 | 170000 | 180000 |
| Citric Acid | 5.6g | 6.9g | 6.3g | 5.5g | 5.5g | 4.9g | 5.2g | 5.0g |
| Malic Acid | 2.2g | 4.0g | 3.3g | 1.8g | 2.3g | 1.1g | 1.3g | 1.4g |
| Oxalic Acid | 0.35g | 0.51g | 0.46g | 0.33g | 0.35g | 0.24g | 0.26g | 0.26g |
| Succinic Acid | 1.10g | 2.08g | 1.88g | 0.99g | 1.20g | 0.81g | 0.86g | 0.85g |
| Acidity | 13.ml | 16.0ml | 15.3ml | 13.0ml | 13.6ml | 12.1ml | 12.7ml | 12.5ml |
| pH | 2.56 | 2.30 | 2.39 | 2.66 | 2.45 | 2.88 | 2.79 | 2.85 |
| Brix | 7.2 | 8.0 | 7.7 | 7.0 | 7.5 | 6.7 | 6.9 | 6.8 |
| Color | Red | Red | Yellowish -red | Red | Red | Yellowish -red | Red | Red |

### (Example 3) Prepared salt-free seasoning liquid

The salt-free seasonings, which use food additives having acidity, thickness, and preserving properties similar to those of salt-free plum extract, were prepared as shown in TABLE 5.

**[TABLE 5] Mixing Ratio in Example 3**

| per 100 ml of salt-free seasoning liquid | | | | | | | | |
|---|---|---|---|---|---|---|---|---|
| Number | 1 | 2 | 3 | 4 | 5 | 6 | 7 | 8 |
| Pectin | 0.4g | 0.4g | 0.4g | 1.0g | 2.0g | 3.0g | 4.0g | 5.0g |
| Citric Acid | 6.0g | 5g | 5g | 5g | 5g | 5g | 6g | 7g |
| Malic Acid | 0g | 2g | 2g | 2g | 2g | 2g | 2g | 3g |
| Oxalic Acid | 0g | 0g | 0.5g | 0.5g | 0.5g | 0g | 0g | 0.5g |
| Succinic Acid | 0g | 0g | 1g | 1g | 1g | 0g | 1g | 2g |

Among the prepared salt-free seasoning liquids, pH 1.8 observed in No.1 was the highest level. All of the prepared salt-free seasoning liquids had satisfactory thickness without microorganism contamination being observed during preservation for one month at room temperature.

### (Example 4) Salt-free self-digested Rosaceae fruits

Apricots, plums, and quinces, belonging to the family Rosaceae, were washed with water and subject to forced-air drying for three days during self-digestion at 55°C in the thermostatic tank to prepare partially-dried self-digested fruits.

The obtained partially-dried self-digested fruits showed reddish-brown color that was stronger than raw fruits. As to the preserving properties, microorganism contamination was not observed during two-week preservation at room temperature.

### (Example 5) Salt-free self-digested Rosaceae fruits extracts

Apricots, plums, and quinces, belonging to the family Rosaceae, were washed with water and vacuum-packed or sealed in polystyrene bags, which were kept at 55°C during self-digestion in the thermostatic tank for 14 days to prepare salt-free fruit extracts.

In the quinces, extract of only 5% of the material weight was obtained, whereas in the apricots and plums, extract of not less than 30% of the material weight having satisfactory acidity and flavor originated from the material fruits was obtained.

### (Example 6) Dried powder of umeboshi

The pulp portion in the amount of 100 g of the salt-free self-digested umeboshi produced as No.1 in Example 1 was cut with a blender and dried at temperature from 55 to 70°C for 5 days. As a result, 59 g of dried salt-free self-digested umeboshi was obtained, 20 g of which was further pulverized in a mortar to prepare dried powder of salt-free self-digested umeboshi.

The prepared dried powder of salt-free self-digested umeboshi had a taste of plum and a strong acidity with high moisture-absorption. The dried powder, after one-month preservation at 37°C, did not change so much in color and indicated satisfactory preserving properties.

### (Example 7) Dried powder of plum extracts

A mixture of 50 ml of No.2 and 50 ml of No.4 in Example 2 were further mixed with 15 g of dextrin, which was stirred from time to time and dried in the thermostatic tank kept at 80°C for three days. The dried mixture was pulverized further in a mortar and dried to prepare 31 g of dried powder of salt-free self-digested plum extracts.

The prepared dried powder of salt-free self-digested plum extracts had a strong acidity and a taste of plum.

### (Example 8) First salt-free plum ketchups

Fresh tomatoes were partially dried during self-digestion, to which cut salt-free self-digested umeboshi or salt-free self-digested plum extract was added for preparing salt-free plum ketchups. TABLE 6 shows preparing conditions.

**[TABLE 6]**

| Preparing Conditions in Example 8 | | |
|---|---|---|
| | Plum Ketchup 1 | Plum Ketchup 2 |
| Weight of Tomato | 150.41g | 300.50g |
| Drying Temperature for Self-digestion | 55°C | 55°C |
| Weight of Dried Tomato | 17.0g | 34g |
| Weight of Plum Extract • Plum Puree | 12.195g | 24.5g |
| Temperature of Self-digestion | 55°C | 55°C |
| Duration of Self-digestion | 72 hours | 96 hours |
| Weight of Plum Ketchup | 35g | 76.5g |

### (Example 9) Second salt-free plum ketchups

For facilitating pectin solubilization, cut salt-free self-digested umeboshi or salt-free self-digested plum extract was added to fresh tomatoes, in which water content was reduced during self-digestion to prepare salt-free plum ketchups. TABLE 7 shows preparing conditions.

**[TABLE 7]**

| Preparing Conditions in Example 9 | | |
|---|---|---|
| | Plum Ketchup 3 | Plum Ketchup 4 |
| Weight of Tomato | 1643.0g | 900g |
| Weight of Plum Extract | 164.3g | 90g |
| Temperature of Self-digestion | 55°C | 55°C |
| Duration of Self-digestion | 96 hours | 120 hours |
| Weight of Plum Ketchup | 330g | 159g |

TABLE 8 shows the results of analyzing the salt-free plum ketchup in Examples 8 and 9. Even without salt, the prepared plum ketchups in both Examples were good-quality seasoning having savoriness and rich taste. It was felt that plum ketchups 1 and 2 had higher pectin concentration than plum ketchups 3 and 4.

**[TABLE 8]**

| Analyzing Results in Examples 8 and 9 | | | | |
|---|---|---|---|---|
| | Plum Ketchup 1 | Plum Ketchup 2 | Plum Ketchup 3 | Plum Ketchup 4 |
| pH | 3.72 | 3.58 | 3.75 | 3.8 |
| Brix | 41.2 | 39.3 | 36.5 | 38.6 |

### (Example 10) Salt-free noodle soup

Soup for dipping noodles was made by mixing 25 g of salt-free plum ketchup 1 in Example 8 with 5 g of olive oil and 70 g of water, which indicated good flavor.

### (Example 11) Salt-free processed ginger

Processed ginger was made by adding 96 g of salt-free plum ketchup 1 in Example 8 to 48 g of julienne ginger, in which self-digestion was brought about for 18 hours at 55°C. The processed ginger had good flavor and was usable like red pickled ginger.

### (Example 12) Salt-free pork cutlet

Pork cutlet was made by applying 10 g of salt-free plum ketchup 1 in Example 8 to 80 g of pork loin, which was coated with flour, egg, and bread crumbs and deep-fried in oil heated to 170°C for 15 minutes. The pork cutlet was given acidity and savoriness emphasizing intrinsic tastiness of the meat itself.

### (Example 13) Rice seasoned with vinegar

Rice seasoned with vinegar was made by cooking 150 g of washed white rice and mixing with 100 ml of salt-free plum extract No.3 in Example 3. The resultant rice seasoned with vinegar had mild acidity and good tasty without showing acetic acid odor.

### (Example 14) Salt-free pasta dish

First, Neapolitan pasta sauce was made by mixing 100 g of salt-free plum ketchup 2 in Example 8, 14 g of butter, 17 g of white wine, and 10 g of minced garlic. Then, 50 g of sliced onion and 40 g of round-sliced green pepper were stir-fried and mixed with the Neapolitan past sauce together with 160 g of boiled pasta, finishing the salt-free past dish given a good flavor.

### (Example 15) Cosmetics

Cosmetics like a milky liquid was made by adding 100 g of purified water, 50.0 g of glycerin, and 0.5 g of phenoxyethanol to 20 g of plum extract in Example 2. After one-week use of the cosmetics, it was found that the cosmetics penetrated well into the skin and showed excellent texture, moisturizing effect, deterioration effect in blotch, and whitening effect.

### (Example 16) Skin lotion

Skin lotion containing plum extract was prepared by stirring a mixture of 1 ml of plum extract No.2 in Example 2,5 g of glycerin, 3 g of urea, and 100 ml of purified water. The skin lotion was slightly acid and rich in moisture.

### (Example 17) Salt-free miso

The salt-free umeboshi, salt-free plum extract, salt-free plum ketchup, and prepared salt-free seasoning liquid were blended and fermented by yeast without salt. The fermentation was performed at 30°C for 60 days. TABLE 9 shows the blending quantity.

**[TABLE 9]**

| Blending Quantity in Example 17 | | | | |
|---|---|---|---|---|
| | Salt-free umeboshi | Salt-free plum extract | Salt-free plum ketchup | Prepared salt-free seasoning liquid |
| Salt-free seasoning | 30g | 30ml | 30g | 30ml |
| Steamed soybean | 100g | 100g | 100g | 100g |
| Malted rice | 50g | 50g | 50g | 50g |
| Bakery yeast | 5g | 5g | 5g | 5g |

In the four types of resultant salt-free miso, good yeast fermentation was observed without spoiling and strong savoriness was held despite having less miso flavor.

### INDUSTRIAL APPLICABILITY

The present invention provides salt-free self-digested fruits, wherein activating autolysins in Rosaceae fruits, such as apricots and plums, at 65°C or below, preferably at 45 to 60°C, converts some of saccharide contained in the pulp into organic acids, which serves to increase the concentration of organic acids in the fruit and to facilitate solubilization of pectin. And the self-digestion at a temperature higher than room temperature also facilitates solubilization of pectin, leading to enhanced physical properties and lowered pH contributing to enhanced preserving properties. With the present invention, salt-free processed products, cosmetics, and fermented food products having good preserving properties as well as good taste can be produced by utilizing salt-free self-digested fruits and extracts thereof.

## Claims

1. A self-digested food product derived from fruit, the self-digested food product derived from fruit being a salt-free self-digested fruit that is obtained by bringing about self-digestion of the fruit at 65°C or below and have yellowish-brown or reddish-brown color,
wherein, when ethanol is added to a hot water extract of the fruit at a 80% ethanol concentration, a fraction of insolubilized pectin is 0.1 g or more and has an average molecular weight of 50,000 or more per 100 g of an edible part of the fruit, while a solubilized part has 2.0 g or more of citric acid and 1.0 g or more of malic acid per 100 g of the edible part of the fruit, and
wherein the edible part of the fruit has pH 3.0 or less and °Brix 6.0 or more.

2. A self-digested food product derived from fruit, the self-digested food product derived from fruit being an extract of salt-free self-digested fruit that is obtained by bringing about self-digestion of the fruit at 65°C or below,
wherein, when ethanol is added to the extract of the salt-free self-digested fruit at a 80% ethanol concentration, a fraction of insolubilized pectin is 0.1 g or more per 100 ml of the extract, while a solubilized part has 2.0 g or more of citric acid and 1.0 g or more of malic acid per 100 ml of the extract, and
wherein the edible part of the fruit has pH 3.0 or less, °Brix 6.0 or more, and 8 ml or more of acidity.

3. The self-digested food product derived from fruit according to claim 1 or claim 2, wherein the fruit belongs to the family Rosaceae.

4. A dried food product in chunk or in powder that is produced by drying the self-digested food product derived from fruit according to claim 1.

5. A dried food product in powder that is produced by drying the self-digested food product derived from fruit according to claim 2.

6. A self-digested food product that is produced by applying the self-digested food product derived from fruit according to claim 1 or claim 2 to one or a plurality of ingredients selected from the group consisting of vegetables, fruits, self-digested vegetables, and self-digested fruits and by bringing about additional self-digestion.

7. A processed food product that is produced by using the self-digested food product derived from fruit according to claim 1 or claim 2, or the self-digested food product according to claim 6.

8. A chemical product that is produced by using the self-digested food product derived from fruit according to claim 1 or claim 2, or the self-digested food product according to claim 6.

9. A fermented food product that is produced by fermenting the self-digested food product derived from fruit according to claim 1 or claim 2, or the self-digested food product according to claim 6.
